# EUROPÄISCHE PATENTSCHRIFT

(11) **EP 1 929 859 B1**
(45) Veröffentlichungstag und Bekanntmachung des Hinweises auf die Patenterteilung: **23.03.2011**
(21) Anmeldenummer: 06123612.1
(22) Anmeldetag: 07.11.2006
(51) Int. Cl.: A01G 25/02

(54) **Dosierelemente für ein Tropfbewässerungsrohr und Verfahren und Vorrichtung zur Herstellung dieser Dosierelemente**
Dosing elements for a drip irrigation pipe, process and device for the production of said dosing elements
Goutteurs pour un tuyau d'irrigation goutte-à-goutte, procédé et dispositif pour produire lesdits goutteurs

(43) Veröffentlichungstag der Anmeldung: 11.06.2008
(73) Patentinhaber: THE Machines Yvonand SA, 1462 Yvonand (CH)
(72) Erfinder: Kertscher, Eberhard, 1462 Yvonand (CH)
(74) Vertreter: BOVARD AG

(56) Entgegenhaltungen:
- WO-A-02/04130
- WO-A-03/066228
- US-A1- 2003 106 633
- US-A1- 2005 258 279

## Beschreibung

Die vorliegende Erfindung bezieht sich auf Dosierelemente für ein Tropfbewässerungsrohr, die in Form eines auf der einen Seite mit hintereinander angeordneten Strukturbereichen versehenen Bandes ausgebildet sind, welches Band mit dieser einen Seite mit der Wandung des das Tropfbewässerungsrohr bildenden Rohrkörpers verbindbar ist, und jeder der Strukturbereiche einen Einlassbereich, einen Dosierbereich und einen Auslassbereich umfasst, sowie auf ein Verfahren und eine Vorrichtung zur Herstellung dieser Dosierelemente.

Mit Dosierelementen versehene Tropfbewässerungsrohre werden zur direkten Bewässerung von Pflanzen eingesetzt. Hierzu können die Tropfbewässerungsrohre beispielsweise so ausgelegt werden, dass sich im Bereich jeder Pflanze ein Auslassbereich eines Dosierelementes befindet, durch welche das Wasser aus dem Tropfbewässerungsrohr tropfweise ausgelassen wird. Hiermit kann jede der einzelnen Pflanzen direkt bewässert werden, wodurch der Wassergebrauch sehr sparsam ist. Es wird vermieden, dass eine grosse Menge des Wassers zur Bewässerung verdunstet, wie dies üblicherweise bei Bewässerungsanlagen geschieht, durch welche über Spritzanlagen das Wasser grossflächig verteilt wird. Mit der Tropfbewässerung über diese Tropfbewässerungsrohre wird somit eine sehr wirtschaftliche Bewässerung erreicht.

Es ist bekannt, Tropfbewässerungsrohre mit einzelnen Dosierelementen herzustellen. Hierbei werden beim Extrusionsvorgang des Rohrkörpers für das Tropfbewässerungsrohr einzelne Dosierelemente zugeführt, die dann an die Wandung des frisch extrudierten Rohrkörpers angepresst werden. Danach wird im Bereich des Auslasses des Dosierelementes in die Wandung des Rohrkörpers eine Öffnung angebracht. Hierzu ist es erforderlich, dass die Position des Auslassbereiches des Dosierelementes sehr genau bekannt sein muss, damit das Anbringen der Austrittsöffnung an der richtigen Stelle erfolgen kann. Eine derartige Lösung ist beispielsweise aus der EP-A 715 926 bekannt. Es hat sich gezeigt, dass mit diesem Herstellungsvorgang von Tropfbewässerungsrohren die Produktionsgeschwindigkeit begrenzt ist.

Es ist auch bekannt, Tropfbewässerungsrohre herzustellen, bei welchen anstelle der einzeln in die Tropfbewässerungsrohre eingesetzten Dosierelemente diese Dosierelemente in einem fortlaufenden Band untergebracht sind, wie dies beispielsweise aus der WO 03/066228 bekannt ist. Hierbei wird ein aus einem elastischen Material bestehendes Band verwendet, auf dessen einer Seite Strukturbereiche eingelassen sind, welche jeweils ein Dosierelement mit einem Einlassbereich, einem Dosierbereich und einem Auslassbereich bilden. Dieses Band wird mit der Wandung des das Tropfbewässerungsrohr bildenden Rohrkörpers verbunden. Da dieses Band aus einem elastischen Material besteht, ist dessen Handhabung bei der Herstellung von Tropfbewässerungsrohren nicht ganz einfach, insbesondere auch deshalb, weil dieses Band wegen der Möglichkeit, aufgrund von Druckunterschieden des Wassers im Tropfbewässerungsrohr die Dosierung durch Verformung des Bandes zu beeinflussen, sehr dünn sein muss. Dies ist insbesondere dann nachteilig, wenn eine hohe Produktionsgeschwindigkeit erreicht werden soll.

Die Aufgabe der vorliegenden Erfindung besteht somit darin, Dosierelemente für ein Tropfbewässerungsrohr zu schaffen, welche eine gute Festigkeit aufweisen, in welchen das Anbringen der Strukturbereiche in einfacher Weise erfolgen kann, und mit welchen insbesondere auch hohe Produktionsgeschwindigkeiten bei der Herstellung von Tropfbewässerungsrohren mit derartigen Dosierelementen erreichbar sind.

Erfindungsgemäss erfolgt die Lösung dieser Aufgabe dadurch, dass das Band ein im wesentlichen längsstabiles flexibles Trägerband umfasst, das auf der einen Seite mit einer Schicht versehen ist, in welche Schicht die Strukturbereiche eingelassen sind.

Mit dieser Ausgestaltung lassen sich die vorgesteckten Ziele erreichen.

In vorteilhafter Weise ist das Trägerband aus einem mechanisch resistenten Kunststoff gebildet, beispielsweise aus einem Polyäthylen hoher Dichte (HDPE), einem Polypropylen oder einem ähnlichen geeigneten Material.

Zudem ist in vorteilhafter Weise die Schicht aus einem thermoplastischen Kunststoff gebildet, in welche die Strukturbereiche beispielsweise durch Prägung in einfacher Weise eingeformt werden können. Hierzu kann beispielsweise ein lineares Polyäthylen mit niedriger Dichte (LLDPE) oder ein leicht ausformbarer Klebstoff, z.B. auf PA-Basis, eingesetzt werden.

Eine weitere vorteilhafte Ausgestaltung der Erfindung wird dadurch erreicht, dass das Band innenseitig an der Wandung des Rohrkörpers anbringbar ist, dass der in die Schicht eingelassene Einlassbereich aus nebeneinander und/oder hintereinander angeordneten Noppen besteht, dass der Dosierbereich aus zwei Seitenwänden und mit den Seitenwänden verbundenen, gegen die Mitte hin vorstehenden Querrippen gebildet ist und dass der Auslassbereich aus einem durch Seitenwände geschlossenen Raum besteht, wobei in diesem Bereich die Wandung des Rohrkörpers mit einer Öffnung versehen wird. Diese Ausgestaltung ergibt neben der einfachen Herstellung durch Einprägen der Strukturbereiche in die Schicht des Bandes eine optimale Funktionsweise der Dosierelemente.

In vorteilhafter Weise sind die Querrippen gegen den Auslassbereich hin geneigt angeordnet und sind gegen das freie Ende hin im wesentlichen spitz zulaufend. Dadurch wird ein optimaler Dosiereffekt für das Wasser erreicht.

Eine weitere Aufgabe der Erfindung besteht darin, ein Verfahren zu schaffen, mit welchem die Dosierelemente in einfacher und optimaler Weise hergestellt werden können, was erfindungsgemäss dadurch erreicht wird, dass ein Trägerband extrudiert und auf ein fortlaufendes Führungsmittel abgelegt und gekühlt wird, dass auf das abgekühlte und verfestigte Trägerband eine Schicht aufgebracht wird, dass in die Schicht die Strukturbereiche eingeprägt werden und dass die Schicht während des Einprägens der Strukturbereiche gekühlt wird.

Das extrudierte Trägerband wird auf dem fortlaufenden Führungsmittel abgekühlt und das Trägerband wird mit der aufgebrachten Schicht und den eingeprägten Strukturbereichen ebenfalls abgekühlt. Durch die Abkühlung des Trägerbandes erhält dieses, bevor die Schicht darauf aufgebracht wird, die gewünschte mechanische Festigkeit, wodurch eine optimale Weiterbehandlung ermöglicht wird. Die nachfolgende Abkühlung der Schicht ergibt die gewünschte und erforderliche Verfestigung der eingeprägten Strukturbereiche für die Weiterverarbeitung. Die Strukturbereiche werden hierdurch nicht mehr "verwischt".

Das so hergestellte Trägerband mit der aufgebrachten Schicht und den darin eingeprägten Strukturbereichen kann direkt in eine Einrichtung zur Herstellung von Tropfbewässerungsrohren eingeführt werden. Dadurch ergibt sich ein einfacher Aufbau der gesamten Produktionsanlage, es sind keine Zwischenlagerungen der Dosierelemente erforderlich.

Eine weitere Aufgabe der Erfindung besteht darin, eine Vorrichtung zur Durchführung des Verfahrens zur Herstellung von Dosierelementen zu schaffen, welche einfach im Aufbau ist und mit welcher die Dosierelemente mit der erforderlichen Geschwindigkeit hergestellt werden können, was erfindungsgemäss dadurch erreicht wird, dass in einem Rahmen eine erste Extrudiervorrichtung angeordnet ist, mit welcher das Trägerband extrudierbar und auf das fortlaufende Führungsmittel ablegbar ist, dass am Rahmen eine zweite Extrudiervorrichtung angebracht ist, mit welcher die Schicht auf das Trägerband aufbringbar ist, und dass am Rahmen eine Prägeeinrichtung vorgesehen ist, mit welcher die Strukturbereiche in die Schicht einprägbar sind.

In vorteilhafter Weise ist das fortlaufende Führungsmittel als rotierbares Rad ausgebildet, liegt das Trägerband nach dem Extrudieren auf dessen Umfangsoberfläche auf und umschlingt das Rad teilweise, und ist die Umfangsoberfläche des Rades kühlbar. Dadurch wird ein einfacher Aufbau der Vorrichtung erreicht.

Eine weitere vorteilhafte Ausgestaltung der Erfindung besteht darin, dass die Prägeeinrichtung als rotierbare Rolle ausgebildet ist, auf deren Umfangsoberfläche eine Strukturierung angebracht ist, die einer Negativform mindestens eines Strukturbereiches entspricht. Auch dies ergibt einen einfachen Aufbau der Vorrichtung, ein exaktes Prägen ist gewährleistet.

In vorteilhafter Weise ist beim Prägevorgang das mit der Schicht versehene Trägerband zwischen dem Rad und der Rolle geklemmt geführt, ist die Rolle kühlbar und umschlingt das mit der geprägten Schicht versehene Trägerband die Rolle mindestens teilweise. Auch dies trägt dazu bei, dass die Strukturbereiche in optimaler Weise in der Schicht erreichbar sind.

Ausführungsformen der Erfindung werden nachfolgend anhand der beiliegenden Zeichnung beispielhaft näher erläutert.

Es zeigt:
Fig. 1 in räumlicher Darstellung ein Teilstück eines Tropfbewässerungsrohres mit eingesetztem Dosierelement, zum Teil im Schnitt;
Fig. 2a eine Ansicht auf die in die Schicht des Bandes eingeprägten Strukturbereiche, wobei jeder Strukturbereich ein Dosierelement bildet;
Fig. 2b eine vergrösserte Ansicht auf einen Strukturbereich, welcher ein Dosierelement bildet, gemäss Fig. 2a;
Fig. 3 in räumlicher Darstellung ein Ausschnitt aus einem Strukturbereich;
Fig. 4 in schematischer Darstellung eine Ansicht auf eine Vorrichtung zur Herstellung der Dosierelemente;
Fig. 5 in schematischer Darstellung eine Ansicht auf eine Vorrichtung zur Herstellung von mit Dosierelementen versehenen Tropfbewässerungsrohren; und
Fig. 6 im Schnitt eine vergrösserte Darstellung des Bereiches der Vorrichtung gemäss Fig. 5, in welchem die Dosierelemente mit der Wandung des Tropfbewässerungsrohres verbunden werden.

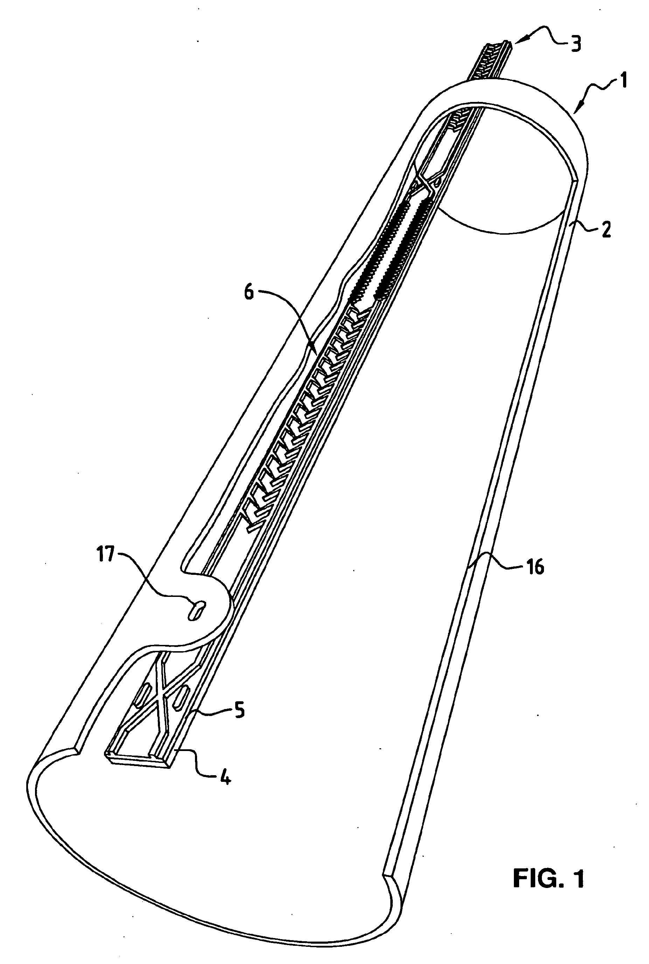

In Fig. 1 ist ein Teilstück eines Tropfbewässerungsrohres 1 räumlich dargestellt. Dieses Tropfbewässerungsrohr 1 wird durch einen Rohrkörper 2 gebildet, bei welchem in Fig. 1 aus Übersichtlichkeitsgründen ein Stück herausgeschnitten wurde. Wie später noch beschrieben wird, erhält man diesen Rohrkörper 2 durch einen Extrusionsvorgang. Eingesetzt in diesen Rohrkörper ist ein Band 3, welches, wie ebenfalls später noch gesehen wird, aus einem Trägerband 4 besteht, dessen eine Seite mit einer Schicht 5 versehen ist, in welche Schicht 5 Strukturbereiche 6 eingelassen sind. Das Band 3 ist mit der Oberfläche dieser Strukturbereiche 6 der Schicht 5 mit der Innenseite der Wandung 16 des Rohrkörpers 2 verbunden.

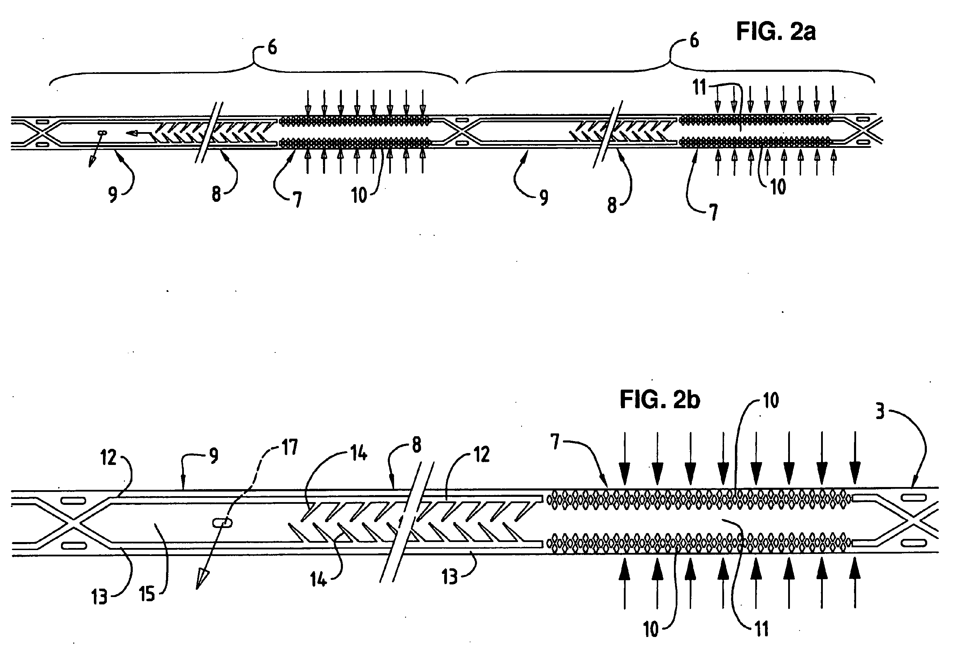

Wie aus Fig. 2a ersichtlich ist, ist dieses Band 3 ein Endlosband. Die Schicht 5 weist hintereinander angeordnete Strukturbereiche 6 auf. Jeder Strukturbereich 6 setzt sich, wie auch aus Fig. 2b ersichtlich ist, aus einem Einlassbereich 7, einen Dosierbereich 8 und einem Auslassbereich 9 zusammen.

Der Einlassbereich 7 wird durch nebeneinander und hintereinander angeordnete Noppen 10 gebildet. Zwischen den Noppen 10 besteht ein Zwischenraum, durch welchen das Wasser, das sich im Rohrkörper 2 unter erhöhtem Druck befindet, in den Einlassraum 11 gelangen kann. Durch die Noppen 10 und den Zwischenraum wird gleichzeitig ein Filter für das durchströmende Wasser gebildet.

Von diesem Einlassraum 11 gelangt das Wasser in den Dosierbereich 8. Dieser Dosierbereich 8 besteht aus zwei Seitenwänden 12 und 13, die entlang der Längsränder des Bandes 3 verlaufen. Mit den Seitenwänden 12 und 13 sind Querrippen 14, welche gegen die Mitte hin vorstehend sind, verbunden. Durch das Labyrinth, das durch die Seitenwände 12 und 13 und die Querrippen 14 gebildet wird, wird der Druck des durchlaufenden Wassers reduziert.

Es sind auch andere Profile möglich, um die gewünschte Turbulenz zu erreichen.

Nach dem Durchlaufen des Dosierbereichs 8 gelangt das Wasser in den Auslassbereich 9. Dieser Auslassbereich 9 besteht aus einem Auslassraum 15, der durch die beiden den Dosierraum 8 begrenzenden und weitergezogenen Seitenwände 12 und 13 gebildet wird, die am den Dosierbereich abgewandten Ende zusammengeführt sind und den Auslassraum 15 abschliessen. Aus diesem Auslassraum 15 gelangt das Wasser tropfweise durch eine in der Wandung 16 des Rohrkörpers 2 angebrachte Austrittsöffnung 17 (Fig. 1) in das zu bewässernde Erdreich.

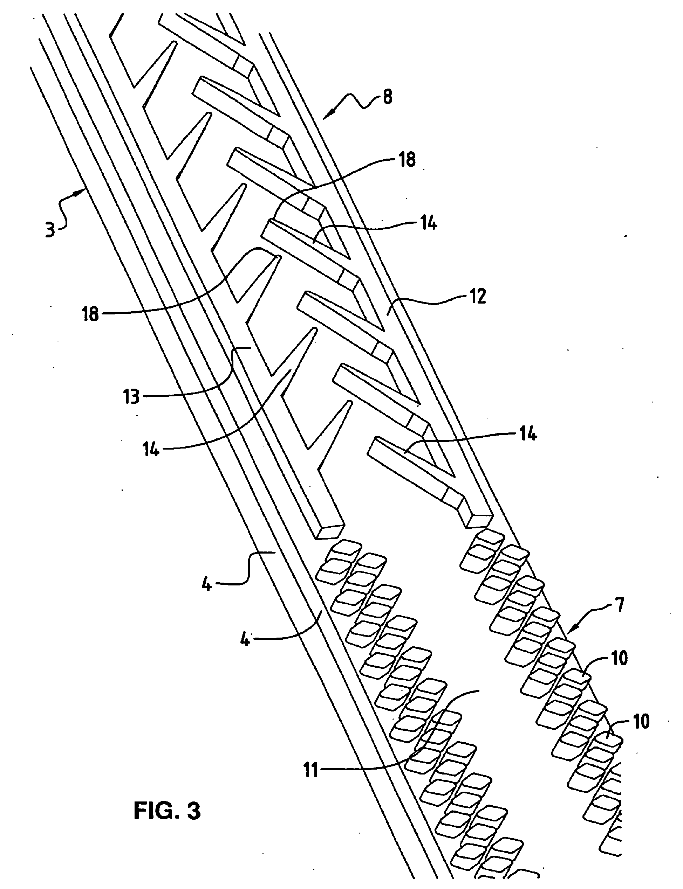

In Fig. 3 ist in einer vergrösserten Darstellung ein Teil des Einlassbereiches 7 und ein Teil des Dosierbereiches 8 des Bandes 3 dargestellt. Im Einlassbereich 7 sind die Noppen 10 ersichtlich, durch den zwischen den Noppen 10 bestehenden Zwischenraum kann das Wasser in den Einlassraum 11 gelangen. Im Dosierbereich 8 sind die beiden Seitenwände 12 und 13 ersichtlich, an welchen die Querrippen 14 angeformt sind. Diese Querrippen 14 sind gegen den Auslassbereich 9 (Fig. 2b) hin geneigt und sind gegen das freie Ende 18 hin im wesentlichen spitz zulaufend. Dadurch wird eine optimale Verwirbelung des durchlaufenden Wassers erreicht, wodurch die gewünschte Reduzierung des Drucks des Wassers erhalten wird.

Das Band 3 hat eine Breite von etwa 5 bis 8 mm, die Dicke des Trägerbandes 4 beträgt einige Zehntelmillimeter, die Höhe der in die Schicht 5 eingelassenen Strukturen beträgt ebenfalls einige Zehntelmillimeter. Die Oberfläche der strukturierten Elemente (Noppen 10, Seitenwände 12, 13, Querrippen 14) befinden sich in der selben Ebene, mit dieser Oberfläche wird das Band 3 mit der Innenseite der Wandung des Rohrkörpers verbunden, wodurch die entsprechenden Räume, welche von Wasser durchlaufen werden, gebildet werden.

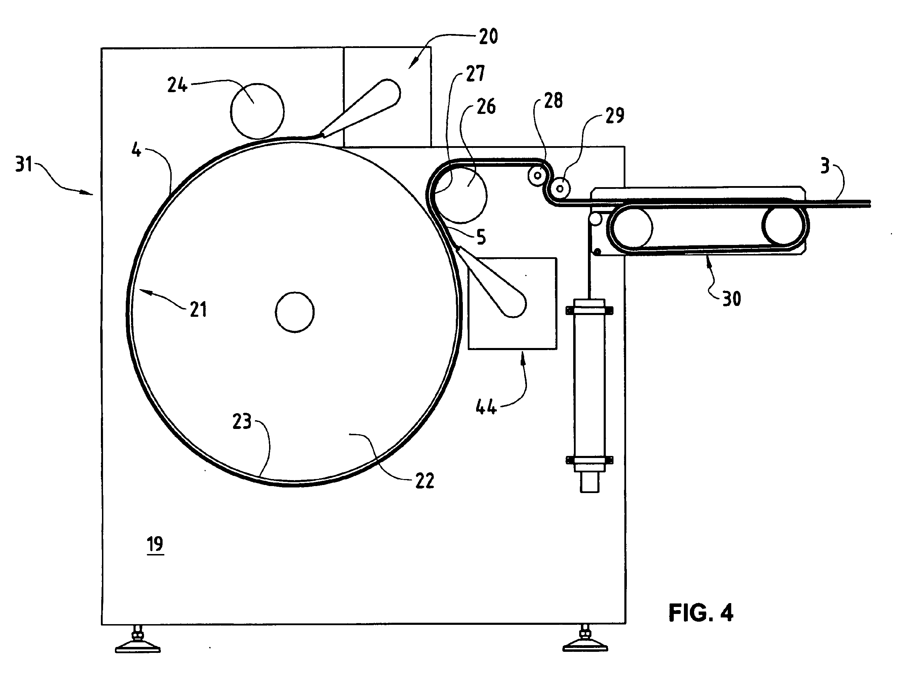

Fig. 4 zeigt in schematischer Weise eine Vorrichtung, mit welcher die Dosierelemente in Form eines Bandes 3 hergestellt werden können. Diese Vorrichtung umfasst einen Rahmen 19, an welchem eine erste Extrudiervorrichtung 20 angeordnet ist. Mit dieser ersten Extrudiervorrichtung 20 kann das Trägerband 4 extrudiert werden, welches Trägerband 4 auf ein fortlaufendes Führungsmittel 21 abgelegt wird, das im vorliegenden Ausführungsbeispiel als rotierbares Rad 22 ausgebildet ist, welches angetrieben ist. Das extrudierte Trägerband 4 wird auf die Umfangsoberfläche 23 dieses Rades 22 abgelegt. Über eine Formrolle 24 wird das extrudierte Material in die Trägerbandform gebracht. Dieses Trägerband 4 umschlingt dann das Rad 22 um einen Teil seines Umfangs, wird in dieser Fase, da die Umfangsoberfläche 23 des Rades 22 in bekannter Weise gekühlt werden kann, abgekühlt, und erlangt dadurch die erforderliche mechanische Festigkeit, insbesondere Zugfestigkeit. Um dies zu erreichen, kann als Material für das Trägerband 4 ein Polyäthylen hoher Dichte (HDPE) verwendet werden, selbstverständlich sind auch andere geeignete Materialien denkbar.

Das auf der Umfangsoberfläche 23 des Rades 22 aufliegende Trägerband 4 gelangt zu einer zweiten Extrudiervorrichtung 24, die ebenfalls am Rahmen 19 angeordnet ist. Mit dieser zweiten Extrudiervorrichtung 24 wird auf das Trägerband 4 die Schicht 5 aufextrudiert. Das so beschichtete Trägerband 4 wird dann zwischen dem Rad 22 und einer Prägeeinrichtung 25 hindurchgeführt, die im vorliegenden Ausführungsbeispiel als rotierbare Rolle 26 ausgebildet ist, die ebenfalls angetrieben und mit der ganzen Anlage synchronisiert ist. Diese Rolle 26 ist an der Umfangsoberfläche 27 mit einer Strukturierung versehen, die einer Negativform beispielsweise eines Strukturbereiches 6 (Fig. 2a) oder einem ganzzahligen Vielfachen davon entspricht. Dadurch werden in das noch gut verformbare Material, aus welchem die Schicht 5 besteht, die Strukturbereiche eingeprägt. Hierbei kann das Material ein lineares Polyäthylen niedriger Dichte (LLDPE) sein, es kann selbstverständlich aber auch ein anderes geeignetes Material verwendet werden, das gut verformbar und prägbar ist.

Das Trägerband 4 mit der darauf angebrachten Schicht 5 umschlingt die Rolle 26 teilweise und wird dann über Führungsrollen 28, 29 in eine bekannte Längenausgleicheinrichtung 30 geführt, von wo das Band 3 dann weggeführt wird. Während des Umschlingens der Rolle 26 wird die strukturierte Schicht 5 gekühlt, da auch die Rolle 26 in bekannter Weise kühlbar ist. Durch die Kühlung erhält die Schicht 5 und die darin eingeprägten Strukturen die gewünschte Formstabilität und Festigkeit, die für die Weiterverarbeitung erforderlich ist, ein "Verwischen" der in die Schicht 5 eingeprägten Strukturen wird dadurch vermieden.

Die Kühlung des Rades 22 und der Rolle 26 kann in bekannter, nicht dargestellter Weise beispielsweise durch Wasser erfolgen, das durch in das Rad 22 bzw. in die Rolle eingebrachte Kühlkanäle geleitet wird.

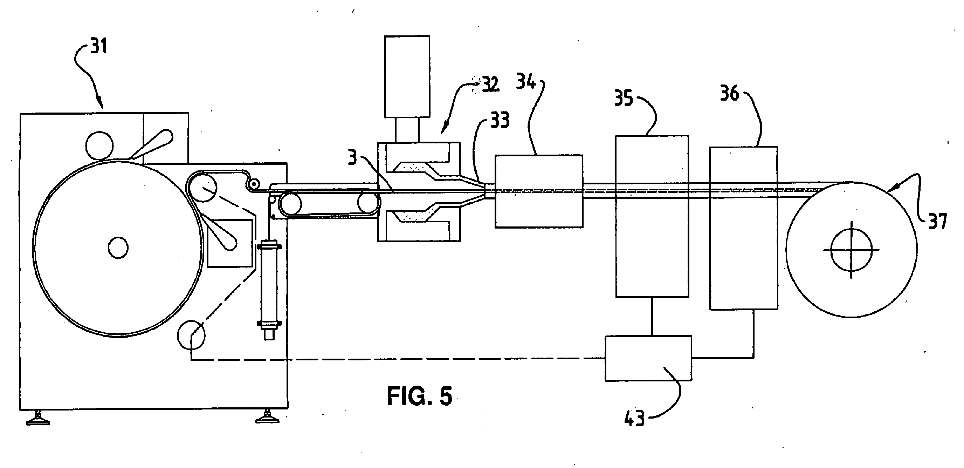

Wie aus Fig. 5 ersichtlich ist, kann diese Vorrichtung 31 in Linie mit einer Einrichtung zur Herstellung von Tropfbewässerungsrohen gebracht werden. Das mit dieser Vorrichtung 31 gefertigte Band 3, das im hier dargestellten Ausführungsbeispiel in bekannter Weise um 180° gedreht wird, gelangt in eine Extrusionseinrichtung 32, wo der Rohrkörper hergestellt wird. Der Rohrkörper 33 mit dem eingelegten Band 3 durchläuft eine Kalibrier- und Kühlvorrichtung 34, in welcher das Band 3 mit dem Rohrkörper 33 verbunden wird, wie nachfolgend noch gesehen wird. Danach wird das Rohr durch eine Einrichtung 35 geführt, in welcher in der Rohrwandung die Austrittsöffnung 17 (Fig. 1) angebracht wird, was beispielsweise durch ein rotierendes Messer erfolgen kann. Selbstverständlich könnte das Anbringen dieser Austrittsöffnung auch durch eine Laserbohreinrichtung oder eine andere geeignete Einrichtung erhalten werden. Über eine Vorschubeinrichtung 36 kann das so gefertigte Rohr auf einer Wickelvorrichtung 37 aufgewickelt werden. Das so fabrizierte Tropfbewässerungsrohr kann dann als Wickelrollen ausgeliefert werden.

Selbstverständlich ist diese Einrichtung zur Herstellung von Tropfbewässerungsrohren in bekannter Weise mit einer schematisch dargestellten Steuereinrichtung 43 ausgestattet, mit welcher beispielsweise die Geschwindigkeiten des Rades 22, der Rolle 26, der Bohreinrichtung 35, der Vorschubeinrichtung 36 und der extrudierten Körper synchronisiert werden.

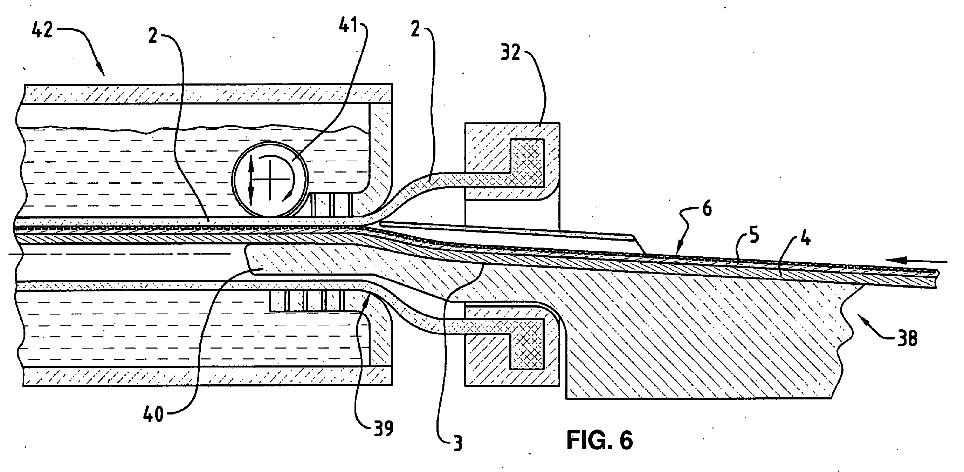

Wie aus Fig. 6 ersichtlich ist, wird das Band 3, das aus dem Trägerband 4 und der darauf angebrachten Schicht 5 mit darin eingeprägten Strukturbereichen 6 besteht, in die Extrusionseinrichtung 32 eingeführt, mit welcher der Rohr-körper 2 extrudiert wird. Das Band 3 gelangt auf einer Zuführeinrichtung 38 in den Kalibrierbereich 39, wo es in Kontakt kommt mit dem Rohrkörper 2. Das Band 3 und der Rohrkörper 2 werden zwischen einem Anpresselement 40, auf welchem das Band 3 aufliegt, und einer Anpressrolle 41 hindurchgeleitet, das Band 3 wird mit der strukturierten Oberfläche mit der Wandung des Rohrkörpers 2, die in diesem Bereich vom Extrusionsvorgang her noch in einem weichen Zustand ist, zusammengepresst und miteinander verbunden bzw. verschweisst. Danach durchläuft das so gefertigte Tropfbewässerungsrohr in bekannter Weise die Kühleinrichtung 42, der Rohrkörper und die Verbindung mit dem Band wird verfestigt.

Mit der vorliegenden Erfindung können Tropfbewässerungsrohre in einfacher Weise und insbesondere mit hoher Geschwindigkeit hergestellt werden, hierbei können diese Tropfbewässerungsrohre unterschiedliche Wanddicken aufweisen, abhängig davon, ob diese Tropfbewässerungsrohre nur für eine Saison oder für mehrere Jahre gebraucht werden.

## Patentansprüche

1. Dosierelemente für ein Tropfbewässerungsrohr (1), die in Form eines auf der einen Seite mit hintereinander angeordneten Strukturbereichen (6) versehenen Bandes (3) ausgebildet sind, welches Band (3) mit dieser einen Seite mit der Wandung (16) des das Tropfbewässerungsrohr (1) bildenden Rohrkörpers (2) verbindbar ist, und jeder der Strukturbereiche (6) einen Einlassbereich (7), einen Dosierbereich (8) und einen Auslassbereich (9) umfasst, **dadurch gekennzeichnet, dass** das Band (3) ein im wesentlichen längsstabiles flexibles Trägerband (4) umfasst, das auf der einen Seite mit einer Schicht (5) versehen ist, in welche Schicht (5) die Strukturbereiche (6) eingelassen sind.

2. Dosierelemente nach Anspruch 1, **dadurch gekennzeichnet, dass** das Trägerband (4) aus einem mechanisch resistenten Kunststoff gebildet ist.

3. Dosierelement nach Anspruch 1 oder 2, **dadurch gekennzeichnet, dass** die Schicht (5) aus einem thermoplastischen Kunststoff gebildet ist.

4. Dosierelement nach einem der Ansprüche 1 bis 3, **dadurch gekennzeichnet, dass** das Band (3) innenseitig an der Wandung (16) des Rohrkörpers (2) anbringbar ist, dass der in die Schicht (5) eingelassene Einlassbereich (7) aus nebeneinander und/oder hintereinander angeordneten Noppen (10) besteht, dass der Dosierbereich (8) aus zwei Seitenwänden (12, 13) und mit den Seitenwänden (12, 13) verbundenen, gegen die Mitte hin vorstehenden Querrippen (14) gebildet ist, und dass der Auslassbereich (9) aus einen durch Seitenwände (12, 13) geschlossenen Raum besteht.

5. Dosierelement nach Anspruch 4, **dadurch gekennzeichnet, dass** die Querrippen (14) gegen den Auslassbereich (15) hin geneigt angeordnet sind und gegen das freie Ende (18) hin im wesentlichen spitz zulaufend sind.

6. Verfahren zur Herstellung der Dosierelemente nach einem der Ansprüche 1 bis 5, **dadurch gekennzeichnet, dass** ein Trägerband (4) extrudiert und auf ein fortlaufendes Führungsmittel (21) abgelegt und gekühlt wird, dass auf das abgekühlte und verfestigte Trägerband (4) eine Schicht (5) aufgebracht wird, dass in die Schicht (5) die Strukturbereiche (6) eingeprägt werden und dass die Schicht (5) während des Einprägens der Strukturbereiche (6) gekühlt wird.

7. Verfahren nach Anspruch 6, **dadurch gekennzeichnet, dass** das Trägerband (4) mit der aufgebrachten Schicht (5) und den darin eingeprägten Strukturbereichen (6) in eine Einrichtung zur Herstellung von Tropfbewässerungsrohren (1) eingeführt wird.

8. Vorrichtung zur Durchführung des Verfahrens nach Anspruch 6 oder 7, **dadurch gekennzeichnet, dass** in einem Rahmen (19) eine erste Extrudiervorrichtung (20) angeordnet ist, mit welcher das Trägerband (4) extrudierbar und auf das fortlaufende Führungsmittel (21) ablegbar ist, dass am Rahmen (19) eine zweite Extrudiervorrichtung (44) angebracht ist, mit welcher die Schicht (5) auf das Trägerband (4) aufbringbar ist, und dass am Rahmen (19) eine Prägeeinrichtung (25) vorgesehen ist, mit welcher die Strukturbereiche (6) in die Schicht (5) einprägbar sind.

9. Vorrichtung nach Anspruch 8, **dadurch gekennzeichnet, dass** das fortlaufende Führungsmittel (21) als rotierbares Rad (22) ausgebildet ist, das Trägerband (4) auf dessen Umfangsoberfläche (23) aufliegt und das Rad (22) teilweise umschlingt, und dass die Umfangsoberfläche (23) des Rades (22) kühlbar ist.

10. Vorrichtung nach Anspruch 8 oder 9, **dadurch gekennzeichnet, dass** die Prägeeinrichtung (25) als rotierbare Rolle (26) ausgebildet ist, auf deren Umfangsoberfläche (27) eine Strukturierung angebracht ist, die einer Negativform mindestens eines Strukturbereiches (6) entspricht.

11. Vorrichtung nach Anspruch 10, **dadurch gekennzeichnet, dass** beim Prägevorgang das mit der Schicht (5) versehene Trägerband (4) zwischen dem Rad (22) und der Rolle (26) geklemmt geführt ist, dass die Rolle (26) kühlbar ist und das mit der geprägten Schicht (5) versehene Trägerband (4) die Rolle (26) mindestens teilweise umschlingt.

## Claims

1. Dosing elements for a drip irrigation tube (1), which are designed in the form of a band (3) with structured areas (6) disposed behind one another on one side, which band (3) is connectible by this one side to the walling (16) of the tube body (2) forming the drip irrigation tube (1), and each of the structured areas (6) comprises an inlet region (7), a dosing region (8) and an outlet region (9), **characterised in that** the band (3) comprises a substantially longitudinally stable, flexible support band (4) which is provided on one side with a layer (5) in which layer (5) the structured areas (6) are provided.

2. Dosing elements according to claim 1, **characterised in that** the support band (4) is made of a mechanically resistant plastic.

3. Dosing element according to claim 1 or 2, **characterised in that** the layer (5) is made of a thermoplastic synthetic material.

4. Dosing element according to one of the claims 1 to 3, **characterised in that** the band (3) is installable inside on the walling (16) of the tube body (2), the inlet region (7) made in the layer (5) consists of protuberances (10) disposed adjacent one another and/or behind one another, the dosing region (8) is formed by two lateral walls (12, 13) and transverse ribs (14), connected to the lateral walls and projecting toward the middle, and the outlet region (9) consists of a space closed by lateral walls (12, 13).

5. The dosing element according to claim 4, **characterised in that** the transverse ribs (14) are disposed inclined toward the outlet region (15) and are substantially tapered toward the free end (18).

6. Method of producing dosing elements for a drip irrigation tube according to one of the claims 1 to 5, **characterised in that** a support band (4) is extruded and is deposited and cooled on an endless guide means (21), a layer (5) is provided on the cooled and solidified support band (4), the structured areas (6) are stamped in the layer (5), and the layer (5) is cooled during the stamping of the structured areas (6).

7. Method according to claim 6, **characterised in that** the support band (4) with the layer (5) applied thereon and the structured areas (6) stamped therein is introduced into an installation for producing drip irrigation tubes (1).

8. Device for producing dosing elements for a drip irrigation tube according to claim 6, **characterised in that** disposed in a frame (19) is a first extruding device (20), with which the support band (4) is able to be extruded and is able to be deposited on the endless guide means (21), installed on the frame (19) is a second extruding device (44) with which the layer (5) is able to be provided on the support band (4), and provided on the frame (19) is a stamping device (25) with which the structured areas (6) are able to be stamped into the layer (5).

9. Device according to claim 8, **characterised in that** the endless guide means (21) is designed as a rotatable wheel (22), the support band (4) lies on its circumferential surface (23), and wraps around the wheel (22) partially, and the circumferential surface (23) of the wheel (22) is coolable.

10. Device according to claim 8 or 9, **characterised in that** the stamping device (25) is designed as a rotatable roller (26) on whose circumferential surface (27) a structuring is provided corresponding to a negative form of at least one structured area (6).

11. Device according to claims 10, **characterised in that** during the stamping process the support band (4) provided with the layer (5) is guided clamped between the wheel (22) and the roller (26), the roller (26) is coolable, and the support band (4) provided with the stamped layer (5) wraps around the roller (26) at least partially.

## Revendications

1. Goutteurs pour un tuyau d'irrigation goutte-à-goutte (1) qui sont réalisés sous forme d'une bande (3) munie d'un côté de zones de structure (6) disposées les unes derrière les autres, bande (3) qui peut être reliée par cette face à la paroi (16) du corps tubulaire (2) formant le tuyau d'irrigation goutte-à-goutte (1) et chacune des zones de structure (6) comprenant une zone d'entrée (7), une zone de dosage (8) et une zone de sortie (9) **caractérisés en ce que** la bande (3) comprend une bande de support (4) flexible sensiblement stable en longueur qui est munie sur une face d'une couche (5), couche (5) dans laquelle sont enrobées les zones de structure (6).

2. Goutteurs selon la revendication 1, **caractérisés en ce que** la bande de support (4) est réalisée en matière plastique mécaniquement résistante.

3. Goutteurs selon la revendication 1 ou 2, **caractérisés en ce que** la couche (5) est réalisée en matière plastique thermoplastique.

4. Goutteurs selon l'une des revendications 1 à 3, **caractérisés en ce que** la bande (3) peut être appliquée sur la face intérieure contre la paroi (16) du corps tubulaire (2), **en ce que** la zone d'entrée (7) incorporée dans la couche (5) se compose de boutons (10), **en ce que** la zone de dosage (8) est réalisée par deux parois latérales (12, 13) et des nervures transversales (14) reliées aux parois latérales (12, 13) et saillantes en direction du milieu et **en ce que** la zone de sortie (9) se compose d'un espace fermé par des parois latérales (12, 13).

5. Goutteurs selon la revendication 4, **caractérisée en ce que** les nervures transversales (14) sont disposées inclinées en direction de la zone de sortie (15) et deviennent sensiblement coniques en direction de l'extrémité libre (18).

6. Procédé pour la fabrication des goutteurs selon l'une des revendications 1 à 5, **caractérisé en ce qu'**une bande de support (4) est extrudée et déposée et refroidie sur un moyen de guidage continu (21), **en ce que** sur la bande de support (4) refroidie et solidifiée, il est appliqué une couche (5), **en ce que** dans la couche (5) sont estampées les zones de structure (6) et **en ce que** la couche (5) est refroidie pendant l'estampage des zones de structure (6).

7. Procédé selon la revendication 6, **caractérisé en ce que** la bande de support (4) avec la couche appliquée (5) et les zones de structure (6) estampées est introduite dans un dispositif pour la fabrication de tuyau d'irrigation goutte-à-goutte (1).

8. Dispositif pour la mise en oeuvre du procédé selon la revendication 6 ou 7, **caractérisé en ce que** dans un cadre (19), il est disposé un premier dispositif d'extrusion (20) avec lequel la bande de support (4) peut être extrudée et être déposée sur le moyen de guidage continu (21), **en ce que** sur le cadre (19) est disposé un second dispositif d'extrusion (24) qui permet d'appliquer la couche (5) sur la bande de support (4) et **en ce qu'**il est prévu sur le cadre (19) un dispositif d'estampage (25) qui permet d'estamper les zones de structure (6) dans la couche (5).

9. Dispositif selon la revendication 8, **caractérisé en ce que** le moyen de guidage continu (21) est réalisé comme une roue rotative (22), **en ce que** la bande de support (4) repose sur sa surface périphérique (23) et entoure partiellement la roue (22) et **en ce que** la surface périphérique (23) de la roue (22) peut être refroidie.

10. Dispositif selon la revendication 8 ou 9, **caractérisé en ce que** le dispositif d'estampage (25) est réalisé comme un rouleau rotatif (26) sur la surface périphérique (27) duquel est appliquée une structure qui correspond à un moule négatif d'au moins une zone de structure (6).

11. Dispositif selon la revendication 10, **caractérisé en ce que** lors de l'opération d'estampage, la bande de support (4) munie de la couche (5) est guidée coincée entre la roue (22) et le rouleau (26), **en ce que** le rouleau (26) peut être refroidi et **en ce que** la bande de support (4) munie de la couche estampée (5) entoure au moins partiellement le rouleau (26).
